# EUROPÄISCHE PATENTSCHRIFT

(11) **EP 2 562 018 B1**
(45) Veröffentlichungstag und Bekanntmachung des Hinweises auf die Patenterteilung: **31.05.2017**
(21) Anmeldenummer: 12180588.1
(22) Anmeldetag: 15.08.2012
(51) Int. Cl.: B60J 7/00, B60J 7/02

(54) **Dachfenstereinheit und Fahrzeug mit einer Dachfenstereinheit**
Roof window unit and vehicle with such a unit
Ensemble de fenêtre de toit et véhicule automobile avec un tel ensemble

(30) Priorität: 22.08.2011 DE 102011081348
(43) Veröffentlichungstag der Anmeldung: 27.02.2013
(73) Patentinhaber: BOS GmbH & Co. KG, 73760 Ostfildern (DE)
(72) Erfinder: Stark, Wolfang, 73760 Ostfildern (DE); Renz, Günther, 71254 Ditzingen (DE); Zeo, Gwenole, 73760 Ostfildern (DE); Kircher, Sascha, 73095 Albershausen (DE)
(74) Vertreter: Patentanwälte Ruff, Wilhelm, Beier, Dauster & Partner mbB

(56) Entgegenhaltungen:
- EP-A1- 1 375 306
- EP-A1- 2 327 576
- WO-A1-2010/125837
- DE-A1-102011 007 620
- DE-C1- 19 538 551
- DE-U1-202004 018 915

## Beschreibung

### Anwendungsgebiet und Stand der Technik

Die Erfindung betrifft eine Dachfenstereinheit für ein Kraftfahrzeug mit einer Fahrzeugscheibe zur in etwa horizontalen Anordnung im Dachbereich des Kraftfahrzeugs und mit mindestens einem unter der Fahrzeugscheibe angeordneten Rollosystem zum zumindest teilweisen Überdecken der Fahrzeugscheibe, wobei das Rollosystem zwei in Fahrzeuglängsrichtung ausgerichtete Führungsschienen sowie ein in Seitenbereichen durch die Führungsschienen geführtes flexibles Flächengebilde aufweist. Die Erfindung betrifft weiterhin ein Fahrzeug mit einer solchen Dachfenstereinheit.

Gattungsgemäße Dachfenstereinheiten sind aus dem Stand der Technik, wie z.B. aus DE 20 2004 018 915 U1, allgemein bekannt. Fahrzeuge mit einem großen Glasdach können über solche Dachfenstereinheiten verfügen und weisen somit neben der üblicherweise recht großen im Dach angeordneten Scheibe ein Rollosystem auf, welches zum Zwecke der Beschattung des Fahrzeuginnenraums diese Scheibe zumindest teilweise abdecken kann.

Aus dem Stand der Technik sind Gestaltungen bekannt, bei denen sowohl die Fahrzeugscheibe als auch das Rollosystem, insbesondere dessen Führungsschienen, unabhängig voneinander im Dachbereich eines Fahrzeugs montiert werden, beispielsweise an einem gemeinsamen Modulrahmen. Zumindest aus internem Stand der Technik ist es jedoch auch bekannt, einen Führungsschienen-Rahmen, der aus zwei längserstreckten Führungsschienen und zwei die Führungsschienen vorne und hinten miteinander verbindenden quererstreckten Traversen besteht, direkt an der Scheibe anzubringen, so dass die Scheibe mit dem daran angebrachten Rollosystem als eine einfach zu handhabende Baueinheit in ein Fahrzeug eingebaut werden kann.

Diese unmittelbare Anbringung der Führungsschienen als Teil eines geschlossenen Rahmens an der Fahrzeugscheibe ist in manchen Fällen nicht ideal, da die die Führungsschienen verbindenden Traversen als ästhetisch nachteilig empfunden werden. Dies gilt insbesondere, wenn sich die Führungsschienen nicht über die gesamte Länge der Scheibe erstrecken, sondern beispielsweise aufgrund der Verwendung mehrerer Rollosysteme oder aus anderweitigem Grund nur über einen Teilbereich der Scheibe. In einem solchen Fall würden die Führungsschienen am hinteren oder am vorderen Ende verbindende Traversen den bestimmungsgemäß vorgesehenen uneingeschränkten Blick durch die Dachscheibe in inakzeptablem Maße beeinträchtigen.

Die Einhaltung eines definierten Abstandes der beiden Führungsschienen eines Rollosystems, dem die genannten Traversen insbesondere dienen, ist erforderlich, da die im angegebenen Anwendungsfeld Verwendung findenden flexiblen Flächengebilde, deren seitlicher Rand durch die Führungsschienen geführt wird, in einem definierten Maße durchhängen sollen. Es ist daher nicht akzeptabel, wenn der Abstand der Führungsschienen sich über die Lebenszeit eines Kraftfahrzeugs hinweg verringert, da hierdurch der Durchhang vergrößert wird. Die Anbringung der Führungsschienen in genau definierter und nicht für eine einzelne Dachfenstereinheit individualisierter Art und Weise an der Fahrzeugscheibe gestattet zwar die Erzielung eines genau definierten konstanten Abstandes. Es hat sich allerdings gezeigt, dass die fehlende Konstanz der Materialeigenschaften des Flächengebildes es erforderlich macht, individuell für jede Dachfenstereinheit einen spezifischen Abstand der Führungsschienen zuzulassen.

### Aufgabe und Lösung

Aufgabe der Erfindung ist es daher, eine gattungsgemäße Dachfenstereinheit dahingehend weiterzubilden, dass ein spezifisch angepasster Abstand der Führungsschienen erzielbar ist, der über die Lebenszeit des Kraftfahrzeugs keine Veränderung erfährt.

Erfindungsgemäß wird dies dadurch erreicht, dass die Führungsschienen in einem vorderen Endbereich und/oder in einem hinteren Endbereich lediglich mittelbar über die Fahrzeugscheibe im Hinblick auf ihren Abstand zueinander fixiert sind, dass weiterhin die Führungsschienen in diesem vorderen Endbereich und/oder hinteren Endbereich jeweils mit einer Festlegungseinrichtung an der Fahrzeugscheibe befestigt sind, und dass mindestens eine dieser Festlegungseinrichtung einer der Führungsschienen als variable Festlegungseinrichtung derart ausgebildet ist, dass sie bezogen auf eine Fahrzeugquerrichtung eine formschlüssige Festlegung dieser Führungsschiene relativ zur Fahrzeugscheibe in einer von mehreren diskreten Relativpositionen gestattet.

Im Sinne der vorliegenden Erfindung sind in Bezug auf die Dachfenstereinheit die Richtungsangaben der Fahrzeuglängsrichtung, Fahrzeugquerrichtung und Fahrzeughochrichtung auf die bevorzugte Einbaulage bezogen zu verstehen. Selbstverständlich ist das technische Grundprinzip der Erfindung auch auf abweichende Ausrichtungen anwendbar.

Die erfindungsgemäß Gestaltung zeichnet sich dadurch aus, dass die Führungsschienen in einem vorderen und/oder hinteren Endbereich oder aber über ihre gesamte Länge nur über die Fahrzeugscheibe relativ zueinander fixiert sind, wobei hierunter zu verstehen ist, dass zumindest in einem vorderen Teilbereich oder einem hinteren Teilbereich, der jeweils mindestens 40% der Gesamtlänge der Führungsschienen einnimmt, keine mittelbare Festlegung und Beabstandungsfixierung der Führungsschienen zueinander über eine verbindende Quertraverse oder dergleichen erfolgt. Stattdessen wird der Abstand der Führungsschienen im jeweils betreffenden Bereich dadurch gesichert, dass beide Führungsschienen mit der Fahrzeugscheibe verbunden sind. Zum Zwecke dieser Verbindung sind im jeweiligen Endbereich die genannten Festlegungseinrichtungen vorgesehen, die beispielsweise ein Anschrauben der Führungsschiene an die Fahrzeugscheibe bzw. einen an der Fahrzeugscheibe befestigten Befestigungsabschnitt gestatten. Mindestens eine dieser Festlegungseinrichtungen erlaubt als variable Festlegungseinrichtung dabei eine Befestigung der jeweiligen Führungsschiene in einer von mehreren zur Verfügung gestellten Relativpositionen relativ zur Fahrzeugscheibe. Diese variable Festlegungseinrichtung erlaubt es somit, die durch sie mit der Fahrzeugscheibe befestigte Führungsschiene auch relativ zur anderen Führungsschiene in einer von mehreren Positionen zu befestigen. Somit ist es möglich, eine an das konkret zu verwendende Flächengebilde angepasste Position dieser variabel befestigbaren Führungsschiene herbeizuführen und somit den gewünschten Durchhang des Flächengebildes zu erzielen. Die variable Festlegungseinrichtung ist hierbei zur Herstellung einer formschlüssigen Verbindung ausgebildet. Somit wird verhindert, dass sich der Abstand der Führungsschienen und somit der Durchhang des Flächengebildes über die Lebensdauer eines Kraftfahrzeugs mit einer erfindungsgemäßen Dachfenstereinheit hinweg nach und nach verändert. Dies wäre zu befürchten, wenn der Abstand der Führungsschienen mittels einer reibkraftbasierten Festlegungseinrichtung erfolgen würde.

Eine besonders einfache, jedoch nicht bevorzugte, Gestaltung einer variablen Festlegungseinrichtung ist beispielsweise dadurch erzielbar, dass in der Führungsschiene mehrere alternativ zueinander verwendbare Bohrungen zum Festschrauben der Führungsschiene an der Scheibe oder einem mit dieser verbundenen Befestigungsabschnitt vorgesehen sind. Auch könnten derartige alternativ zueinander verwendbare Bohrungen am jeweiligen Befestigungsabschnitt vorgesehen sein. Eine solche Lösung führt jedoch zu einem recht großen Abstand in Fahrzeugquerrichtung der mehreren diskreten Relativpositionen. Die erfindungsgemäße variable Festlegungseinrichtung zeichnet sich dadurch aus, dass sie einen an der Fahrzeugscheibe angebrachten Befestigungsabschnitt aufweist, an dem die Führungsschiene befestigbar ist, wobei der Befestigungsabschnitt und die Führungsschiene aufeinander zuweisend Profilierungen aufweisen, die in mehreren unterschiedlichen Relativlagen bezogen auf die Fahrzeugquerrichtung in Eingriff miteinander gebracht werden können. Bei einer solchen Gestaltung greifen führungsschienenseitige und befestigungsabschnittseitige Profilierungen der Festlegungseinrichtung ineinander ein, wobei die gewünschte dauerhafte Formschlüssigkeit dadurch erreicht wird, dass mittels zusätzlicher Befestigungen wie Schrauben oder Rastmitteln die Profilierungen an der Führungsschiene und dem Befestigungsabschnitt aneinander so fixiert werden, dass die Profilierungen nicht mehr außer Eingriff voneinander gelangen können. Die vorzugsweise aus Kunststoff gefertigten Befestigungsabschnitte können in definierter und nicht für jede Dachfenstereinheit spezifischer sondern für alle baugleichen Dachfenstereinheiten identischer Anordnung an der Scheibe angespritzt oder angeklebt sein.

Eine besonders einfache und bevorzugte Form der Profilierungen wird durch Verzahnungen gebildet, die am Befestigungsabschnitt und/oder an der Führungsschiene vorgesehen sind. Die Zähne dieser Verzahnung erstrecken sich dabei vorzugsweise parallel zur Fahrzeuglängsrichtung, so dass bei der Montage die Verzahnungen zunächst zur Erzielung des richtigen Abstandes zur anderen Führungsschiene in Eingriff miteinander gebracht werden können, um anschließend noch eine Verschiebung der Führungsschienen in Fahrzeugquerrichtung zu gestatten. Vorzugsweise sind am Befestigungsabschnitt und/oder an der Führungsschiene mindestens drei in Fahrzeugquerrichtung beabstandete Zähne. Der Zahnabstand liegt vorzugsweise bei weniger als 2 mm, insbesondere vorzugsweise bei weniger als 1,5 mm.

Vorzugsweise erstreckt sich die führungsschienenseitige Profilierung annähernd (> 80%) über die Gesamtlänge der Führungsschiene. Dies gestattet es, die Führungsschiene als Kunststoff- oder Metallprofile in einem kontinuierlichen Verfahren herzustellen.

Die Führungsschienen können bei einer Gestaltung mittelbar miteinander ausschließlich über die Fahrzeugscheibe verbunden sein. Bei einer solchen Gestaltung ist somit der Abstand der Führungsschienen zueinander über ihre gesamte Länge nicht durch eine unmittelbar die Führungsschienen verbindende Traverse garantiert, sondern ist über die gesamte Länge und somit sowohl im vorderen als auch im hinteren Endbereich der Führungsschienen jeweils ausschließlich dadurch bedingt, in welcher Relativlage die Führungsschienen an der Glasscheibe befestigt sind.

Eine alternative Gestaltung hierzu sieht vor, dass die Führungsschienen entweder am vorderen oder am hinteren Ende mittels einer Traverse miteinander verbunden sind, wobei diese Traverse vorzugsweise auch als Träger einer an ihr drehbar gelagert angebrachten Wickelwelle zur Aufnahme des Flächengebildes dient. Wenn diese Traverse mit beiden Führungsschienen fest verbunden ist, so wird im Endbereich der Abstand der Führungsschienen zueinander durch die jeweilige Anbringung der Führungsschienen an der Traverse bestimmt. In einem solchen Falle sind vorzugsweise nur die entgegengesetzten Endbereiche der Führungsschiene hinsichtlich ihres Abstandes zueinander durch die variable Festlegungseinrichtung definiert.

Besonders von Vorteil ist eine erfindungsgemäße Dachfenstereinheit, bei der vorgesehen ist, dass zwei Rollosysteme der beschriebenen Art zum zumindest teilweisen Überdecken der Fahrzeugscheibe vorgesehen sind, wobei die Rollosysteme jeweils zwei in Fahrzeuglängsrichtung ausgerichtete Führungsschienen sowie jeweils ein in Seitenbereichen durch die jeweiligen Führungsschienen geführtes flexibles Flächengebilde aufweisen, wobei die beiden Rollosysteme in Fahrzeuglängsrichtung hintereinander an der Fahrzeugscheibe befestigt sind. Dabei ist vorzugsweise vorgesehen, dass zumindest die Führungsschienen des vorderen Rollos in einem hinteren Endbereich nicht durch eine Traverse, sondern lediglich mittelbar über die Fahrzeugscheibe, im Hinblick auf ihren Abstand zueinander fixiert sind, und zumindest die Führungsschienen des hinteren Rollos in einem vorderen Endbereich nicht durch eine Traverse, sondern lediglich mittelbar über die Fahrzeugscheibe im Hinblick auf ihren Abstand zueinander fixiert sind.

Eine solche Gestaltung dient dem Zweck, zwei voneinander getrennte Rollosysteme als Teil einer Dachfenstereinheit vorzusehen und hierfür jeweils an der Fahrzeugscheibe anzubringen, wobei das eine Rollosystem ein teilweises Überdecken der Fahrzeugscheibe von vorne aus und das andere Rollosystem ein teilweises Überdecken der Fahrzeugscheibe von hinten aus gestattet. Sofern eines dieser Rollosysteme oder beide Rollosysteme eine Quertraverse aufweisen, an der beispielsweise die jeweilige Wickelwelle drehbar angebracht ist, so sind diese Quertraversen jeweils an den vom jeweils anderen Rollosystem wegweisenden Ende eines Rollosystems vorzusehen, so dass die aufeinander zu weisenden Endbereiche beider Rollosysteme frei von solchen Traversen sind, um den freien Ausblick durch die Scheibe im Fahrzeugdach nicht zu behindern. Die erfindungsgemäße Festlegung zumindest eines Endbereichs der jeweiligen Führungsschienen an der Fahrzeugscheibe mittels einer variablen Festlegungseinrichtung gestattet die spezifisch angepasste Beabstandung der aufeinander zu weisenden Endbereiche der jeweiligen Führungsschienen unabhängig voneinander, so dass zur Erzielung eines übereinstimmenden Durchhangs der jeweiligen Flächengebilde der Abstand der Führungsschienen zueinander am vorderen Rollosystem und am hinteren Rollosystem sich voneinander unterscheiden können.

Die Erfindung betrifft weiterhin auch ein Fahrzeug mit einer Dachfenstereinheit, wobei diese nach oben beschriebener Art ausgebildet ist.

### Kurzbeschreibung der Zeichnungen

Weitere Aspekte und Vorteile der Erfindung ergeben sich aus den Ansprüchen sowie aus zwei bevorzugten Ausführungsbeispielen, die anhand der Figuren erläutert sind.
- Fig. 1: zeigt ein Fahrzeug mit einer erfindungsgemäßen Dachfenstereinheit zur Verdeutlichung der Einbaulage,
- Fig. 2: zeigt eine erste Ausführungsform einer erfindungsgemäßen Dachfenstereinheit in einer Gesamtdarstellung,
- Fig. 3: zeigt in einer vergrößerten Darstellung eine variable Festlegungseinrichtung zur Festlegung einer der beiden Führungsschienen der Dachfenstereinheit gemäß Fig. 2,
- Fig. 4: zeigt die Dachfenstereinheit der Fig. 2 in einer Perspektive mit Blickrichtung in Fahrzeuglängsrichtung,
- Fig. 5: zeigt in schematischer Weise eine alternative Ausführungsform einer erfindungsgemäßen Dachfenstereinheit.

### Detaillierte Beschreibung der Ausführungsbeispiele

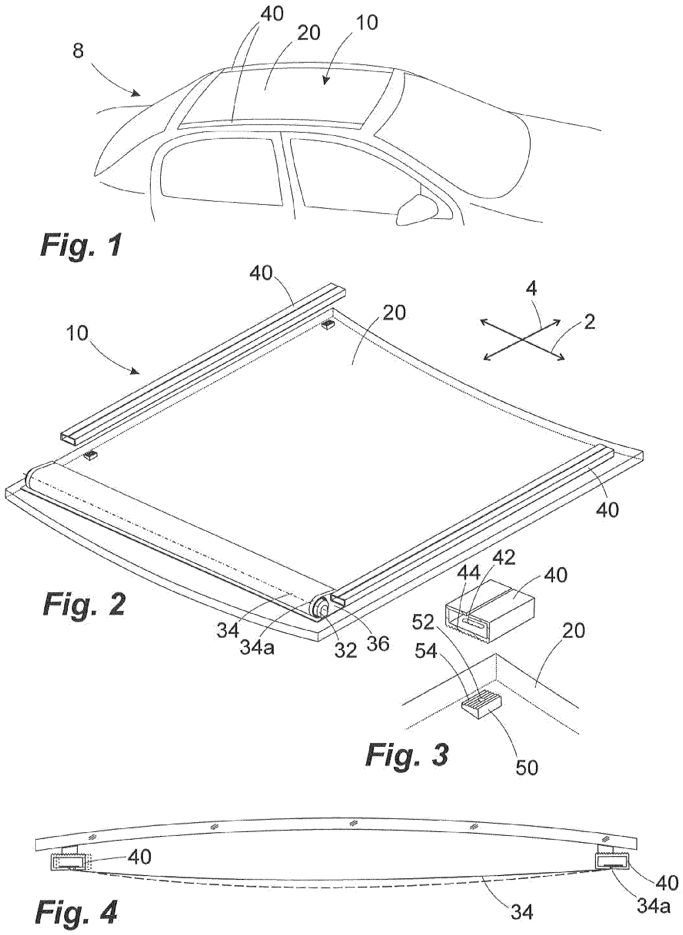

Fig. 1 zeigt ein Fahrzeug 8 mit einer erfindungsgemäßen Dachfenstereinheit 10. Diese Dachfenstereinheit 10 ist in einer Aussparung im Dach des Fahrzeugs 2 vorgesehen und umfasst eine die Aussparung überdeckende Scheibe 20 sowie ein darunter angeordnetes Rollosystem 30 mit zwei Führungsschienen 40.

Fig. 2 zeigt eine Gesamtdarstellung dieser erfindungsgemäßen Dachfenstereinheit 10 von unten. Diese verfügt über die bereits genannte Scheibe 20, welche vergleichsweise groß ist (mindestens 80 cm x 80 cm) und die zur dargestellten Anbringung im Dachbereich des Fahrzeugs vorgesehen ist. In der Perspektive der Fig. 2 ist die Blickrichtung von schräg unten auf diese Scheibe 20 gerichtet. Die Dachfenstereinheit 10 verfügt unterhalb der Scheibe 20 über ein manuell zu betätigendes und somit antriebsmotorfreies Rollosystem 30, welches als Hauptkomponenten eine drehbar gelagerte Wickelwelle 32 mit darauf aufgewickeltem und gegen die Kraft einer Wickelfeder abwickelbarem Flächengebilde 34 sowie die genannten Führungsschienen 40 zur verschieblichen Aufnahme von am Rande des Flächengebildes 34 vorgesehenen Teflonstreifen 34a aufweist. Die Wickelwelle 32 ist drehbar an einem Rollowellenträger 36 vorgesehen, der in nicht näher dargestellter Weise an der Scheibe 20 befestigt ist. Die Führungsschienen 40 sind in ebenfalls an der Scheibe 20 befestigt, wobei in der Darstellung der Fig. 2 die linke Führungsschiene angehoben ist, um die Art der Befestigung zu verdeutlichen.

Wie sich in vergrößerter Form aus Fig. 3 ergibt, erfolgt die Befestigung der Führungsschienen 40 an der Scheibe 20 über Befestigungsabschnitte 50, welche von unten an die Scheibe angeklebt oder angespritzt sind. Diese Befestigungsabschnitte 50 verfügen über eine in nicht näher dargestellter Art und Weise mit einem Gewinde ausgebildete Festlegungsbohrung 52. Korrespondierend hierzu sind die Führungsschienen 40 mit Langlöchern 42 ausgebildet, welche unter Nutzung der Festlegungsbohrungen 52 ein Festschrauben der Führungsschienen 40 an der Scheibe 20 in variabler Position bezogen auf die Fahrzeugquerrichtung 2 gestatten. Dabei ist allerdings keine stufenlos einstellbare Relativposition der Führungsschienen 40 zur Scheibe 20 gegeben. Stattdessen ist zur Erzielung einer möglichst stabilen Verbindung im Hinblick auf eine unveränderlich Beabstandung der Führungsschienen 40 zueinander vorgesehen, dass am Befestigungsabschnitt 50 sowie an den Führungsschienen 40 aufeinander zu weisend Profilierungen 54, 44 vorgesehen sind. Bei diesen Profilierungen handelt es sich um in Fahrzeuglängsrichtung 4 erstreckte Zähne einer Verzahnung, wobei sich diese Verzahnung im Falle der Führungsschienen 40 über deren gesamte Länge erstreckt.

Die Verzahnungen 44, 54 gestatten in der auch aus Fig. 4 gut ersichtlichen Weise eine Festlegung der Führungsschienen 40 nur in definierten Sollpositionen an den Befestigungsabschnitten 50. Hierdurch wird zwar die Flexibilität im Hinblick auf die Beabstandung der Führungsschienen 40 zueinander eingeschränkt. Dafür wird in Verbindung mit der Befestigungsschraube, die durch das Langloch 42 in die Befestigungsbohrung 52 ragt und somit einer Trennung der Befestigungsabschnitte von den Führungsschienen 40 entgegenwirken, eine formschlüssige Festlegung der Führungsschienen in Bezug auf die Fahrzeugquerrichtung 2 erzielt, welche auch über die gesamte Lebenszeit eines Fahrzeugs eine dauerhaft unveränderliche Beabstandung der Führungsschienen 40 voneinander gewährleistet.

Fig. 4 verdeutlicht, wie die Beabstandung der Führungsschienen 40 voneinander sich durch den Durchhang des Flächengebildes 34 beeinflussen. Es ist zu erkennen, dass das Flächengebilde 34 mittels seiner Teflonstreifen 34a in die Führungsschienen 40 hineingreift, so dass die Seitenränder des Flächengebildes 34 geführt entlang der Führungsschienen 40 beweglich sind. Durch die im Zuge der Montage stattfindende Verlagerung der linksseitigen Führungsschiene 40 aus der gestrichelt dargestellten Position in die nicht gestrichelt dargestellte Position wird eine Verringerung des Durchhangs des Flächengebildes 34 erreicht.

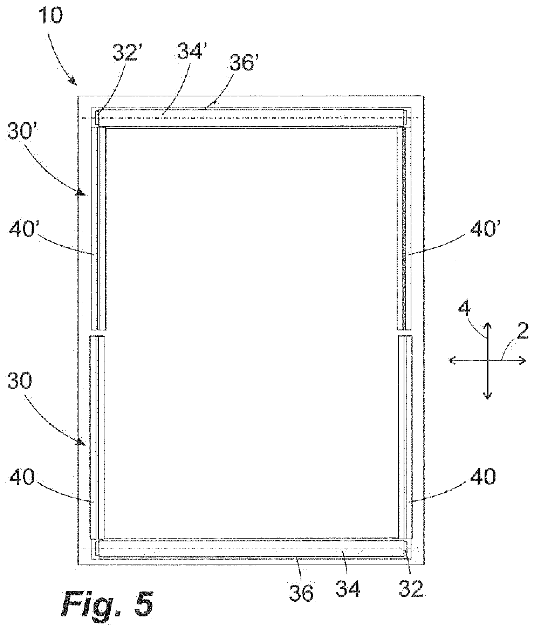

Fig. 5 zeigt in schematischer Art und Weise eine alternative Gestaltung. Diese stimmt baulich mit einer Ausnahme mit der Ausgestaltung der Fig. 2 bis 4 überein. Die Besonderheit bei der Gestaltung der Ausführungsform der Fig. 5 liegt darin, dass zwei Rollosysteme 30, 30' vorgesehen sind, die jeweils zwei Führungsschienen 40, 40' aufweisen. Die jeweiligen Wickelwellen 32, 32' sind an gegenüberliegenden Enden der Rollosysteme und somit in vorderen bzw. hinteren Randbereichen der Scheibe 20 vorgesehen. Die jeweiligen Flächengebilde 34, 34' können somit aufeinander zu bewegt werden, um die Scheibe 20 weitgehend vollständig abzudecken und somit den Fahrgastinnenraum weitgehend vollständig zu beschatten.

Zwar könnte bei einer solchen Gestaltung auch vorgesehen sein, statt jeweils eigener Führungsschienen 40, 40' für beide Rollosysteme 30, 30' gemeinsame Führungsschienen vorzusehen, deren Abstand dann über die Quertraversen 36, 36' eingestellt werden könnte. Dies würde jedoch die Gefahr bergen, dass die jeweiligen Flächengebilde 32, 32' im abgewickelten Zustand in unterschiedlichem Maße durchhängen. Um dies zu verhindern, sind die jeweils rollosystemeigenen und spezifisch beabstandeten Führungsschienen 40, 40' vorgesehen, die im Falle des Ausführungsbeispiels der Fig. 4 zur Verdeutlichung des Vorteils in leicht unterschiedlichem Abstand zueinander an der Fahrzeugscheibe 20 angebracht sind, um hierdurch einen übereinstimmenden Durchhang zu erzielen.

Die Anbringung dieser Führungsschienen 40, 40' oder zumindest der jeweiligen Enden dieser Führungsschienen 40, 40', die aufeinander zu weisen, an der Scheibe 20 erfolgt mit den zu den Fig. 2 bis 4 bereits beschrienen Befestigungsabschnitten 50.

## Patentansprüche

1. Dachfenstereinheit (10) für ein Kraftfahrzeug (8) mit
- einer Fahrzeugscheibe (20) zur in etwa horizontalen Anordnung im Dachbereich des Kraftfahrzeugs (8) und
- mindestens einem unter der Fahrzeugscheibe (20) angeordneten Rollosystem (30, 30') zum zumindest teilweisen Überdecken der Fahrzeugscheibe (20), wobei das Rollosystem zwei in Fahrzeuglängsrichtung (4) ausgerichtete Führungsschienen sowie ein in Seitenbereichen durch die Führungsschienen (40) geführtes flexibles Flächengebilde (34) aufweist,
wobei
- die Führungsschienen (40) in einem vorderen Endbereich und/oder in einem hinteren Endbereich lediglich mittelbar über die Fahrzeugscheibe (20) in Hinblick auf ihren Abstand zueinander fixiert sind und
- die Führungsschienen (40) in diesem vorderen Endbereich und/oder hinteren Endbereich jeweils mit einer Festlegungseinrichtung (42, 44, 50, 52, 54) an der Fahrzeugscheibe (20) befestigt sind,
**dadurch gekennzeichnet, dass**
- mindestens eine Festlegungseinrichtung (42, 44, 50, 52, 54) einer der Führungsschienen (40) als variable Festlegungseinrichtung (42, 44, 50, 52, 54) ausgebildet ist, , die einen an der Fahrzeugscheibe angebrachten Befestigungsabschnitt (50) aufweist, an dem die Führungsschiene (40) befestigbar ist, wobei der Befestigungsabschnitt (50) und die Führungsschiene (40) aufeinander zu weisend Profilierungen (44, 54) aufweisen, die in mehreren unterschiedlichen Relativlagen in Eingriff miteinander bringbar sind, so dass die variable Festlegungseinrichtung (42, 44, 50, 52, 54) bezogen auf eine Fahrzeugquerrichtung (2) eine formschlüssige Festlegung dieser Führungsschiene (40) relativ zur Fahrzeugscheibe (20) in einer von mehreren diskreten Relativpositionen gestattet

2. Dachfenstereinheit nach Anspruch 1,
**dadurch gekennzeichnet, dass**
die führungsschienensseitige Profilierung (44) sich zumindest annähernd über die Gesamtlänge der Führungsschiene (40) erstreckt.

3. Dachfenstereinheit nach 1 oder 2,
**Dadurch gekennzeichnet, dass**
die Profilierungen (44, 54) am Befestigungsabschnitt (50) und an der Führungsschiene (40) als Verzahnungen ausgebildet sind.

4. Dachfenstereinheit nach einem der vorstehenden Ansprüche,
**dadurch gekennzeichnet, dass**
die Führungsschienen (40) entweder am vorderen oder am hinteren Ende mittels einer Traverse (36) miteinander verbunden sind, wobei vorzugsweise eine Wickelwelle (32) zur aufgewickelten Aufnahme des Flächengebildes (34) an der Traverse drehbar gelagert ist.

5. Dachfenstereinheit nach einem der Ansprüche 1 bis 3,
**dadurch gekennzeichnet, dass**
die Führungsschienen (40) mittelbar miteinander ausschließlich über die Fahrzeugscheibe (20) verbunden sind.

6. Dachfenstereinheit nach einem der vorstehenden Ansprüche,
**dadurch gekennzeichnet, dass**
die Dachfenstereinheit (10) zwei Rollosysteme (30, 30') zum zumindest teilweisen Überdecken der Fahrzeugscheibe (20) aufweist, wobei die Rollosysteme (30, 30') jeweils zwei in Fahrzeuglängsrichtung ausgerichtete Führungsschienen (40, 40') sowie jeweils ein in Seitenbereichen durch die jeweiligen Führungsschienen geführtes flexibles Flächengebilde (34, 34') aufweisen und wobei die Rollosysteme (30, 30') in Fahrzeuglängsrichtung (4) hintereinander an der Fahrzeugscheibe (20) befestigt sind.

7. Dachfenstereinheit nach Anspruch 6,
**dadurch gekennzeichnet, dass**
- zumindest die Führungsschienen (40') des vorderen Rollos (30') in einem hinteren Endbereich lediglich mittelbar über die Fahrzeugscheibe (20) in Hinblick auf ihren Abstand zueinander fixiert sind, und
- zumindest die Führungsschienen (40) des hinteren Rollos in (30) in einem vorderen Endbereich lediglich mittelbar über die Fahrzeugscheibe (20) in Hinblick auf ihren Abstand zueinander fixiert sind.

8. Fahrzeug (8) mit einer Dachfenstereinheit (10),
**dadurch gekennzeichnet, dass**
die Dachfenstereinheit (10) nach einem der vorstehenden Ansprüche ausgebildet ist.

## Claims

1. Sunroof unit (10) for a motor vehicle (8) having
- a vehicle window (20) for approximately horizontal arrangement in the roof area of the vehicle (8) and
- at least one roller blind system (30, 30') arranged below the vehicle window (20) for at least partial covering of the vehicle window (20), where the roller blind system has two guide rails aligned in the vehicle longitudinal direction (4) and a flexible planar structure (34) guided in lateral areas by the guide rails (40), wherein
- the guide rails (40) are fixed with regard to their distance from one another in a front end area and/or in a rear end area only indirectly by the vehicle window (20), and
- the guide rails (40) in this front end area and/or rear end area are each fastened to the vehicle window (20) using a fixing device (42, 44, 50, 52, 54),
**characterized in that**
- at least one fixing device (42, 44, 50, 52, 54) of one of the guide rails (40) is designed as a variable fixing device (42, 44, 50, 52, 54) which has a fastening section (50) attached to the vehicle window and to which the guide rail (40) can be fastened, wherein the fastening section (50) and the guide rail (40) have profiles (44, 54) facing one another which can be engaged with one another in several different relative positions, so that the variable fixing device (42, 44, 50, 52, 54) permits a form-fitted fixing of said guide rail (40) relative to the vehicle window (20) in one of several discrete relative positions in respect of a vehicle transverse direction (2).

2. Sunroof unit according to claim 1, **characterized in that** the profile (44) on the guide rail side extends at least approximately over the entire length of the guide rail (40).

3. Sunroof unit according to claim 1 or 2, **characterized in that** the profiles (44, 54) on the fastening section (50) and on the guide rail (40) are designed as toothings.

4. Sunroof unit according to any of the preceding claims, **characterized in that** the guide rails (40) are connected to one another either at the front or the rear end by means of a cross-member (36), wherein preferably a winding shaft (32) for wound-on receiving of the planar structure (34) is rotatably mounted on the cross-member.

5. Sunroof unit according to any of claims 1 to 3, **characterized in that** the guide rails (40) are indirectly connected to one another exclusively by the vehicle window (20).

6. Sunroof unit according to any of the preceding claims, **characterized in that** the sunroof unit (10) has two roller blind systems (30, 30') for at least partial covering of the vehicle window (20), wherein the roller blind systems (30, 30') each have two guide rails (40, 40') aligned in the vehicle longitudinal direction and in each case a flexible planar structure (34, 34') guided in lateral areas by the respective guide rails, and wherein the roller blind systems (30, 30') in the vehicle longitudinal direction (4) are fastened one behind the other to the vehicle window (20).

7. Sunroof unit according to claim 6, **characterized in that**
- at least the guide rails (40') of the front roller blind (30') in a rear end area are fixed in respect of their distance from one another only indirectly by the vehicle window (20), and
- at least the guide rails (40) of the rear roller blind in (30) in a front end area are fixed in respect of their distance from one another only indirectly by the vehicle window (20).

8. Vehicle (8) having a sunroof unit (10), **characterized in that** the sunroof unit (10) is designed according to any of the preceding claims.

## Revendications

1. Ensemble de fenêtre de toit (10) pour un véhicule automobile (8), comprenant
- une vitre de véhicule (20) pour une disposition approximativement horizontale dans la zone du toit du véhicule (8) et
- au moins un système de store roulant (30, 30') aménagé au-dessous de la vitre de véhicule (20) pour recouvrir la vitre de véhicule (20) au moins partiellement, le système de store roulant comportant deux rails de guidage alignés dans la direction longitudinale du véhicule (4) ainsi qu'une structure planaire flexible (34) guidée dans des zones latérales par le biais de rails de guidage (40), dans lequel
- les rails de guidage (40) sont fixés dans une région d'extrémité avant et/ou dans une région d'extrémité arrière seulement indirectement par le biais de la vitre de véhicule (20) par rapport à la distance l'un de l'autre et
- les rails de guidage (40) sont fixés à la vitre de véhicule (20) dans ladite région d'extrémité avant et/ou région d'extrémité arrière respectivement par un dispositif de fixation (42, 44, 50, 52, 54),
**caractérisé en ce que**
- au moins un dispositif de fixation (42, 44, 50, 52, 54) d'un des rails de guidage (40) est conçu sous forme d'un dispositif de fixation (42, 44, 50, 52, 54) variable, présentant une section d'attache (50) appliquée sur la vitre de véhicule, le rail de guidage (40) étant fixable sur cette section d'attache, dans lequel la section d'attache (50) et le rail de guidage (40) comportent des profilages (44, 54) orientés l'un vers l'autre, qui peuvent être amenés à s'engrener l'un dans l'autre dans plusieurs positions relatives différentes, de manière à ce que le dispositif de fixation (42, 44, 50, 52, 54) variable permet une fixation par complémentarité de formes dudit rail de guidage (40) relativement à la vitre de véhicule (20) dans une de plusieurs positions relatives discrètes par rapport à une direction de véhicule transversale (2).

2. Ensemble de fenêtre de toit selon la revendication 1, **caractérisé en ce que** le profilage (44) côté rail de guidage s'étend au moins approximativement sur la longueur totale du rail de guidage (40).

3. Ensemble de fenêtre de toit selon la revendication 1 ou 2, **caractérisé en ce que** les profilages (44, 54) sont aménagés sur la section d'attache (50) et sur le rail de guidage (40) sous forme de dentures.

4. Ensemble de fenêtre de toit selon l'une quelconque des revendications précédentes, **caractérisé en ce que** les rails de guidage (40) sont reliés entre aux soit sur l'extrémité avant soit sur l'extrémité arrière au moyen d'une traverse (36), dans lequel de préférence un arbre d'enroulement (32) pour le logement de la structure planaire (34) enroulée est monté pour rotation sur la traverse.

5. Ensemble de fenêtre de toit selon l'une quelconque des revendications 1 à 3, **caractérisé en ce que** les rails de guidage (40) sont reliés entre aux indirectement exclusivement par le biais de la vitre de véhicule (20).

6. Ensemble de fenêtre de toit selon l'une quelconque des revendications précédentes, **caractérisé en ce que** l'ensemble de fenêtre de toit (10) comporte deux systèmes de store roulant (30, 30') pour recouvrir la vitre de véhicule (20) au moins partiellement, les systèmes de store roulant (30, 30') chacun comportant deux rails de guidage (40, 40') alignés dans la direction longitudinale du véhicule ainsi que chacun comportant une structure planaire flexible (34, 34') guidée dans des zones latérales par le biais de rails de guidage respectifs, et dans lequel les systèmes de store roulant (30, 30') sont fixés à la vitre de véhicule (20) l'un derrière l'autre dans la direction longitudinale du véhicule (4).

7. Ensemble de fenêtre de toit selon la revendication 6, **caractérisé en ce que**
- au moins les rails de guidage (40') du store roulant (30') avant sont fixés dans une région d'extrémité arrière seulement indirectement par le biais de la vitre de véhicule (20) par rapport à la distance l'un de l'autre et
- au moins les rails de guidage (40) du store roulant (30) arrière sont fixés dans une région d'extrémité avant seulement indirectement par le biais de la vitre de véhicule (20) par rapport à la distance l'un de l'autre.

8. Véhicule (8) comprenant un ensemble de fenêtre de toit (10), **caractérisé en ce que** l'ensemble de fenêtre de toit (10) est conçu selon l'une quelconque des revendications précédentes.
